# EUROPÄISCHE PATENTSCHRIFT

(11) **EP 2 313 671 B1**
(45) Veröffentlichungstag und Bekanntmachung des Hinweises auf die Patenterteilung: **09.05.2012**
(21) Anmeldenummer: 09776136.5
(22) Anmeldetag: 11.08.2009
(51) Int. Cl.: F16H 61/22, F16H 61/24

(54) **WÄHLHEBEL MIT AKTUATORISCHEM POSITIONSWECHSEL**
SELECTOR LEVER HAVING ACTUATING CHANGE OF POSITION
LEVIER DE SÉLECTION AVEC CHANGEMENT DE POSITION PAR ACTIONNEUR

(30) Priorität: 20.08.2008 DE 102008041374
(43) Veröffentlichungstag der Anmeldung: 27.04.2011
(73) Patentinhaber: ZF Friedrichshafen AG, 88038 Friedrichshafen (DE)
(72) Erfinder: RAKE, Ludger, 49356 Diepholz (DE); GIEFER, Andreas, 49448 Lemförde (DE); ROSENTRETER, Sascha, 32339 Espelkamp (DE)
(86) Internationale Anmeldenummer: PCT/DE2009/050042
(87) Internationale Veröffentlichungsnummer: WO 2010/020244

(56) Entgegenhaltungen:
- EP-A- 0 429 193
- WO-A-98/03803
- DE-C1- 19 944 179
- US-A- 5 251 723

## Beschreibung

Die Erfindung betrifft eine Betätigungseinrichtung für ein Gangwechselgetriebe, beispielsweise für ein Schaltgetriebe oder für einen Getriebeautomaten mit shift-by-wire-Betätigung, gemäß dem Oberbegriff des Patentanspruchs 1.

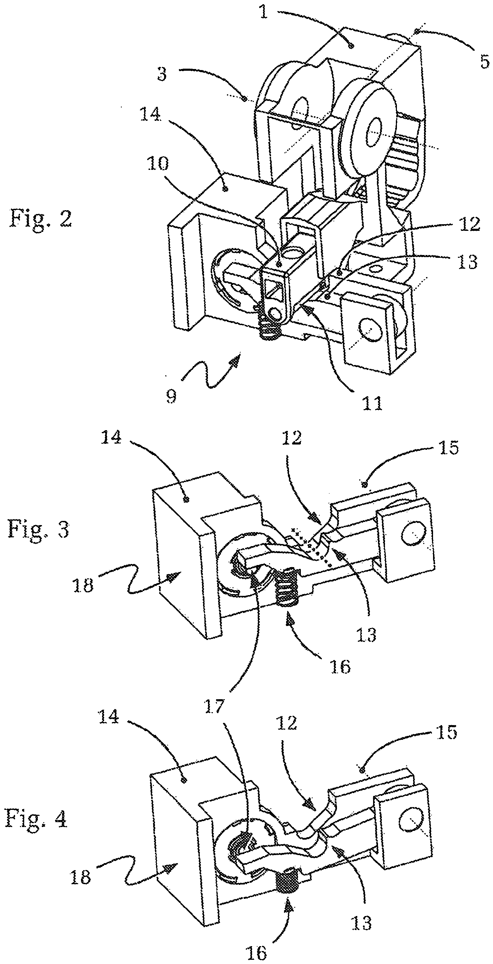

Dokument EP 0 429 193 stellt den nächstliegenden Stand der Technik dar: Es zeigt eine Betätigungseinrichtung (Fig. 2), insbesondere zur Auswahl von Schaltstufen eines shift-by-wire Gangwechselgetriebes, die Betätigungseinrichtung umfassend einen Gehäusesockel (16) sowie einen zwischen zumindest zwei Rastpositionen hin und her bewegbaren Wählhebel (12) mit einer ein federbelastetes (32) Rastierelement (24) umfassenden Rastiereinrichtung, die Rastiereinrichtung ferner aufweisend eine Rastierkontur (34, 39) zur Rastierung des Wählhebels sowie eine Schrägkontur (D, N, R, P) zur Rückführung des Wählhebels in die erste Rastposition, wobei das Wählhebel-Rastierelement gleichzeitig sowohl mit der Rastierkontur als auch mit der Schrägkontur in Überdeckung bringbar ist, und wobei Rastierkontur und Schrägkontur in Richtung auf das Wählhebel-Rastierelement relativ zueinander verstellbar sind, wobei die Schrägkontur im Wesentlichen starr mit dem Gehäusesockel verbunden und die Rastierkontur relativ zum Gehäusesockel zwischen einer ersten, rastierelementnahen und einer zweiten, rastierelementfernen Position hin und her bewegbar ist (schwenkbar um 35), die Betätigungseinrichtung eine Aktuatoreinrichtung (160) mit einer aktuatorischen Sperre zur Verriegelung der Rastierkontur in ihrer ersten, rastierelementnahen Position umfasst.

Gangwechselgetriebe von Kraftfahrzeugen werden im allgemeinen mittels einer im Griffbereich des Fahrers angeordneten Betätigungseinrichtung geschaltet bzw. gesteuert. Regelmäßig kommen hierzu Betätigungselemente wie Schalthebel oder Wählhebel zum Einsatz, die beispielsweise zwischen den Frontsitzen des Kraftfahrzeugs oder in anderen Bereichen des Cockpits angeordnet sind.

Im Fall einer mechanischen Getriebebetätigung bzw. einer mechanischen Kopplung zwischen Wählhebel und Gangwechselgetriebe - beispielsweise mittels Seilzug oder Gestänge - stimmt dabei die Wählheberstellung aufgrund der mechanischen Kopplung stets mit dem tatsächlichen Getriebezustand überein. Der Fahrer kann demzufolge einerseits von der jeweiligen Wählhebelstellung auf den aktuellen Schaltzustand des Getriebes schließen, und sich andererseits darauf verlassen, dass die Hebelstellung nicht vom tatsächlichen Schaltzustand des Getriebes abweicht.

Bei der elektrischen bzw. shift-by-wire-Betätigung von Gangwechselgetrieben existiert jedoch keine mechanische Kopplung mehr zwischen dem Betätigungshebel in der Fahrgastzelle und dem Kraftfahrzeuggetriebe im Motorraum. Vielmehr erfolgt die Übertragung der Schaltbefehle von der Betätigungseinrichtung zum Kraftfahrzeuggetriebe beim "shift-by-wire"-Getriebe mittels elektrischer oder elektronischer Signale und anschließender beispielsweise elektrohydraulischer Umsetzung der Schaltbefehle im Getriebe. Die fehlende mechanische Verbindung zwischen der Getriebeaktuatorik und dem Betätigungshebel führt dabei dazu, dass der Getriebezustand, etwaige Schaltsperren oder unzulässige Schaltbefehle nicht mehr direkt und für den Fahrer spürbar auf den Zustand des Betätigungshebels rückwirken können.

Im Fall der by-wire-betätigten Gangwechselgetriebe kann die fehlende mechanische Verbindung zwischen der Getriebeaktuatorik und dem Wählhebel aber auch dazu führen, dass die Wählhebelstellung unter bestimmten Rahmenbedingungen oder im Fehlerfall nicht mehr mit dem Schaltzustand des Getriebes übereinstimmt.

So weisen moderne Automatgetriebe im Allgemeinen beispielsweise eine sogenannte Auto-P-Funktion auf, die dafür sorgt, dass beim Verlassen des Fahrzeugs ggf. automatisch die Parksperre im Getriebe eingelegt wird, um so etwa ein Wegrollen des unbeaufsichtigten Fahrzeugs zu unterbinden, falls der Fahrer das Einlegen der Parksperre vor dem Verlassen des Fahrzeugs versäumt hat. Die Auto-P-Funktion, die insbesondere dann selbsttätig in Aktion treten kann, wenn der Zündschlüssel abgezogen oder das Fahrzeug verlassen wird, sorgt mit anderen Worten für das automatische Einlegen der Parksperre im Getriebe, und zwar unabhängig von der tatsächlich am Wählhebel angewählten Fahrstufe. Die Parksperre würde durch die Auto-P-Funktion des Getriebes bzw. des Fahrzeugs somit auch dann eingelegt, wenn der Wählhebel vom Fahrer beispielsweise in der Neutralstellung, in einer etwa vorhandenen Tippgasse, oder in einer der Fahrstufenstellungen belassen worden wäre.

In diesem Fall stimmt jedoch die Wählhebelstellung nicht mehr mit dem tatsächlichen Schaltzustand des Getriebes überein. Bei der Rückkehr zum Fahrzeug, bzw. beim nächsten Startversuch des Fahrzeugs, würde anhand der Wählhebelstellung daher sowohl optisch als auch haptisch eine zunächst unzutreffende Information an den Fahrer gegeben. Anhand der Wahrnehmung der Wählhebelstellung müsste der Fahrer davon ausgehen, dass sich das Getriebe beispielsweise in der Neutralstellung, im Tippmodus oder in einer Fahrstufenstellung befindet, während im Getriebe hingegen tatsächlich die Parksperre eingelegt ist. Diese Diskrepanz zwischen der Wählhebelstellung und dem Getriebezustand könnte somit zu unerwünschten Fehlbedienungen, oder Fehlschlüssen durch den Fahrer führen.

Aus der DE 10 2007 015 262 A1 der Anmelderin ist eine Betätigungseinrichtung für ein Kraftfahrzeuggetriebe mit einer Einrichtung zur Rückführung des Wählhebels bekannt, die eine Aktuatoreinrichtung mit einem Getriebemotor vorsieht, mit dem eine selbsttätige Rückstellung des Wählhebels beispielsweise aus der manuellen Schaltgasse (Tippgasse) in die Automatikgasse, bzw. eine Rückführung des Wählhebels in die Parksperrenstellung erfolgen kann. Bei dieser bekannten Betätigungseinrichtung ist jedoch ein gewisser konstruktiver Aufwand zu treiben, um die gewünschte aktuatorische Bewegbarkeit des Wählhebels zu realisieren, mit entsprechenden Folgen bezüglich Bauraumbedarf und Kosten. Auch ist damit zu rechnen, dass der elektromotorische Antrieb und das dort vorhandene Untersetzungsgetriebe störende Geräusche verursachen können.

Ähnliches gilt für die aus der DE 100 05 328 A1 bekannten Schaltvorrichtung für ein Automatikgetriebe. Bei dieser Schaltvorrichtung steht ein mit einem Wählhebel verbundenes Rastierelement gleichzeitig im Eingriff mit einer Rastierkontur sowie mit einer motorisch verstellbaren Rampe. Mittels der Rampe kann das Rastierelement außer Eingriff mit der Rastierkontur gebracht und anschließend anhand des Gefälles der Rampe - zusammen mit dem Wählhebel - selbsttätig in eine bestimmte Rastierposition zurückgeführt werden. Bei dieser bekannten Lehre ist der motorische oder hydraulische Antrieb der Rampe jedoch ebenfalls relativ aufwändig, und benötigt nicht unerheblichen Bauraum. Im Falle des Antriebs mittels eines elektrischen Getriebemotors sind zudem ebenfalls Geräuschprobleme zu erwarten.

Mit diesem Hintergrund ist es die Aufgabe der vorliegenden Erfindung, eine Betätigungseinrichtung für ein Gangwechselgetriebe zu schaffen, mit der die im Stand der Technik vorhandenen Nachteile überwunden werden. Mit der Erfindung soll zuverlässig dafür gesorgt werden, dass auch bei shift-by-wire-gesteuerten Gangwechselgetrieben die Wählhebelposition den tatsächlichen Schaltzustand des Getriebes - beispielsweise im Falle der P-Position - widerspiegelt, wodurch eine zuverlässige optische und taktile Rückmeldung über den tatsächlichen Schaltzustand des Getriebes realisiert werden soll. Insbesondere soll mit der Erfindung verhindert werden können, dass der Wählhebel im Fall einer automatisch eingelegten Parksperre ("Auto-P") irreführenderweise in der zuletzt eingenommenen Schaltstellung verbleibt. Im Unterschied zu den aus dem Stand der Technik bekannten Lösungen soll diese Funktionalität jedoch mit geringem konstruktivem Aufwand, bei geringem Bauraumbedarf, und ohne störende Geräuschentwicklung realisiert werden.

Diese Aufgabe wird gelöst durch eine Betätigungseinrichtung mit den Merkmalen des Patentanspruchs 1.

Bevorzugte Ausführungsformen sind Gegenstand der Unteransprüche.

In für sich genommen zunächst bekannter Weise umfasst die Betätigungseinrichtung gemäß der vorliegenden Erfindung einen Gehäusesockel sowie einen Wählhebel mit einem federbelasteten Rastierelement. Der Wählhebel ist zwischen zumindest zwei Rastpositionen oder Schaltgassen hin und her bewegbar. In an sich ebenfalls bekannter Weise umfasst die Betätigungseinrichtung ferner eine Rastiereinrichtung zur Rastierung des Wählhebels in den einzelnen Rastpositionen, wobei die Rastiereinrichtung eine Rastierkontur zur Rastierung des Wählhebels und eine - ein entsprechendes Gefälle in Bezug auf das Rastierelement aufweisende - Schrägkontur zur selbsttätigen Rückführung des Wählhebels in die erste Rastposition aufweist. Dabei ist das Rastierelement des Wählhebels im wesentlichen gleichzeitig sowohl mit der Rastierkontur als auch mit der Schrägkontur in Überdeckung bzw. in Eingriff bringbar, und Rastierkontur und Schrägkontur sind relativ zueinander in Richtung auf das Wählhebel-Rastierelement aktuatorisch bewegbar.

Erfindungsgemäß zeichnet sich die Betätigungseinrichtung jedoch dadurch aus, dass die Schrägkontur im Wesentlichen starr mit dem Gehäusesockel verbunden ist, während die Rastierkontur relativ zum Gehäusesockel zwischen einer ersten, rastierelementnahen und einer zweiten, rastierelementfernen Position hin und her bewegbar ist. Die Rastierkontur ist in Richtung auf das Rastierelement des Wählhebels federbelastet, und überdeckt in ihrer ersten Position die Schrägkontur dergestalt, dass das Rastierelement des Wählhebels in dieser Position der Schrägkontur lediglich mit der Rastierkontur in effektivem Eingriff steht. Ferner ist die Aktuatoreinrichtung durch eine aktuatorisch betätigte Sperre zur Verriegelung der Rastierkontur in deren ersten, rastierelementnahen Position gebildet. Die Federbelastung der beweglichen Rastierkontur ist dabei effektiv schwächer als die Federbelastung des Rastierelements, und die erste Rastposition der

Rastierkontur (bezogen auf das Rastierelement des Wählhebels in seiner ersten Rastposition) stimmt mit der ersten Rastposition der Schrägkontur überein.

Dank des gleichzeitigen Eingriffs des am Wählhebel angeordneten Rastierelements in die beiden Rastkonturen der Rastiereinrichtung sowie dank der aktuatorischen Relativbeweglichkeit der beiden Rastkonturen lassen sich die beiden Rastkonturen der Rastiereinrichtung somit gleichzeitig, bzw. wahlweise, mit dem Rastierelement des Wählhebels in Eingriff bringen. Insbesondere können die beiden Rastkonturen der Rastiereinrichtung - zum Zweck des Normalbetriebs des Wählhebels - relativ zueinander so bewegt werden, dass die Schrägkontur größtenteils von der Rastierkontur überdeckt ist, das Rastierelement des Wählhebels also lediglich mit der Rastierkontur in effektivem Eingriff steht. Dies bedeutet, dass das Rastierelement des Wählhebels in jeder Schaltposition des Wählhebels in eine entsprechende Vertiefung der Rastierkontur einrastet, und der Wählhebel somit zunächst einmal stabil in der jeweils angewählten Position verbleibt.

Soll der Wählhebel jedoch nun - z.B. im Fall von Auto-P - selbsttätig aus einer Schaltposition (bzw. aus einer der Schaltgassen) in die Parksperrenstellung (bzw. in die erste Schaltgasse) zurück bewegt werden, so lässt sich zu diesem Zweck die Rastierkontur - relativ zur Schrägkontur bzw. relativ zum Gehäusesockel - so bewegen, dass das Rastierelement des Wählhebels nicht mehr mit der Rastierkontur, sondern nun mit der Schrägkontur in effektivem Eingriff steht. Aufgrund des Gefälles der Schrägkontur und der Federbelastung des Rastierelements führt dies dazu, dass das Rastierelement des Wählhebels auf der Schrägkontur in Richtung des Gefälles abwärts gleitet, womit der Wählhebel sich selbsttätig in Bewegung setzt, und erst in derjenigen Position bzw. Schaltgasse zur Ruhe kommt, die mit der entsprechenden ersten Rastposition der Schrägkontur, bzw. mit deren tiefster Stelle, korrespondiert.

Dadurch, dass die Schrägkontur erfindungsgemäß im Wesentlichen starr mit dem Gehäusesockel verbunden ist, während die Rastierkontur federbelastet und beweglich relativ zum Gehäusesockel - und somit auch relativ zu der mit dem Gehäusesockel verbundenen Schrägkontur - angeordnet und mittels einer aktuatorischen Sperre in ihrer rastierelementnahen Position verriegelbar ist, ergibt sich die mit der Erfindung angestrebte, konstruktiv besonders einfache Darstellung der selbsttätigen Wählhebelrückführung.

Denn erfindungsgemäß ist damit - zur Rückführung des Wählhebels in dessen erste Rastposition - keine aufwändige Aktuatorik mehr erforderlich, insbesondere kein Motor mit Getriebeübersetzung oder dergleichen. Vielmehr kann sich die Aktuatorik zur Relativbewegung der beiden Rastkonturen dank der Erfindung auf eine einfache Verriegelung der beweglichen Rastierkontur in ihrer rastierelementnahen Position beschränken. Zur Rückführung des Wählhebels ist somit lediglich mittels eines einfachen Aktuators die Verriegelung der beweglichen Rastierkontur zu lösen, wonach die eigentliche Rückführbewegung des Wählhebels durch die in der Feder des Wählhebel-Rastierelements gespeicherte potentielle Energie erfolgen kann.

Dies wird insbesondere dadurch ermöglicht, dass die Federbelastung der beweglichen Rastierkontur effektiv schwächer ist als die Federbelastung des Rastierelements am Wählhebel, sowie dadurch, dass die erste Rastposition der Rastierkontur mit der ersten Rastposition der Schrägkontur übereinstimmt. Aufgrund der gegenüber dem Wählhebel-Rastierelement effektiv schwächeren Federbelastung der beweglichen Rastierkontur wird die bewegliche Rastierkontur nach dem Lösen ihrer Verriegelung durch das federbelastete Rastierelement des Wählhebels selbsttätig ausgerückt, und das Rastierelement kommt hierdurch in effektiven Eingriff mit der Schrägkontur. Aufgrund des Gefälles der Schrägkontur sowie aufgrund der Federbelastung des Rastierelements führt dies zur Rückführung des Wählhebels in die gewünschte erste Rastposition bzw. erste Schaltgasse.

Hat der Wählhebel auf diese Weise die gewünschte erste Rastposition bzw. Schaltgasse erreicht, ist also das Rastierelement des Wählhebels an der ersten Rastposition bzw. an der tiefsten Stelle der Schrägkontur angelangt, so kann die bewegliche Rastierkontur aufgrund ihrer Federbelastung wieder in ihre Ausgangsposition zurückkehren, da die erste Rastposition der Rastierkontur in deren Ausgangsposition erfindungsgemäß mit der ersten Rastposition bzw. mit der tiefsten Stelle der Schrägkontur übereinstimmt.

Die aktuatorische Sperre zur Verriegelung der Rastierkontur in der ersten, rastierelementnahen Position ist dabei vorzugsweise durch einen Anker eines Elektromagneten gebildet. Auf diese Weise ergibt sich eine konstruktiv einfache und robuste Darstellung der aktuatorischen Steuerung der beweglichen Rastierkontur. Ebensogut lassen sich jedoch auch andere Aktuatoren wie beispielsweise Linearantriebe, Piezoelemente, Gedächtnislegierungen, oder Elektromotoren z.B. mit Sperrnocken einsetzen.

Die Erfindung wird ferner unabhängig davon verwirklicht, wie das am Wählhebel angeordnete, federbelastete Rastierelement konstruktiv ausgebildet ist, solange der erforderliche gleichzeitige bzw. parallele Eingriff in die Rastierkontur und in die Schrägkontur gewährleistet werden kann. Gemäß einer bevorzugten Ausführungsform der Erfindung weist das Wählhebel-Rastierelement jedoch eine im Wesentlichen zylindrische bzw. prismatische, spricht eine langgestreckte Form mit im Wesentlichen konstantem Querschnitt auf. Vorzugsweise ist das Rastierelement dabei als federbelastete Rastierrolle ausgebildet.

Eine im Wesentlichen zylindrische bzw. prismatische Form des Rastierelements ist konstruktiv gut realisierbar, und der gleichzeitige Eingriff in Rastierkontur und Schrägkontur kann damit einfach gewährleistet werden. Die Ausbildung des Rastierelements als federbelastete Rastierrolle ist vorteilhaft insofern, als so nur geringe Reibungsverluste zwischen dem Rastierelement und der Rastierkontur bzw. der Schrägkontur entstehen, womit eine zuverlässige Rückführung des Wählhebels in die gewünschte erste Rastposition bzw. Schaltgasse gewährleistet ist.

Die erfindungsgemäße Aktuatorik ist nicht nur auf die Anwendung beim Wechsel von Rastpositionen eines Wählhebels beschränkt, sondern lässt sich - bei einer Betätigungseinrichtung mit mehreren Schaltgassen - ebenso gut auch für die selbsttätige Hebelrückführung in eine bestimmte Schaltgasse einsetzen. Dementsprechend sieht eine weitere Ausführungsform der Erfindung vor, dass die Rastiereinrichtung zur Rastierung des Wählhebels in zumindest zwei Schaltgassen ausgebildet ist.

Bei entsprechend doppelter Ausführung der Rastiereinrichtung lässt sich dabei auch eine aktuatorische Rückführung des Wählhebels sowohl in eine bestimmte Schaltgasse, als auch in eine bestimmte Rastposition innerhalb einer Schaltgasse realisieren.

Eine weitere Ausführungsform der Erfindung sieht vor, dass die Betätigungseinrichtung ein Kreuzstück zur Führung des Wählhebels umfasst, wobei am Kreuzstück eine Sperrlasche angeordnet ist. Dabei kann die Sperrlasche mittels eines Sperraktuators mit dem Gehäusesockel verrastet werden. Auf diese Weise kann eine Verriegelung des Kreuzstücks und damit des Wählhebels in einer der Rastpositionen bzw. Schaltgassen erfolgen, wodurch sich auf einfache Weise insbesondere Schaltsperren wie beispielsweise Shiftlock, oder eine Blockierung des Schaltgassenwechsels in bestimmten Schaltgassen realisieren lassen, so dass beispielsweise nur aus der Schaltposition "D" der Automatikgasse in die manuelle Tippgasse gewechselt werden kann, nicht jedoch aus den Schaltpositionen "P", "R" oder "N".

Vorzugsweise ist der Sperraktuator dabei durch das Ende eines Ankers eines elektromagnetischen Aktuators gebildet, welches mit der am Kreuzstück angeordneten Sperrlasche in Eingriff bringbar ist. Besonders bevorzugt weist die Betätigungseinrichtung hierbei einen elektromagnetischen Aktuator auf, der sowohl zur Verriegelung der Rastierkontur als auch zum verriegelnden Eingriff mit der Sperrlasche und damit zur Blockierung des Wählhebels in der ersten Rastposition bzw. Schaltgasse dient.

Diese konstruktiv vorteilhafte Doppelfunktion des elektromagnetischen Aktuators wird dadurch erreicht, dass beide Enden des Ankers des Aktuators funktionell eingesetzt werden, indem das eine Ende des Ankers zur Verriegelung der Rastierkontur und das gegenüberliegende Ende des Ankers zum verriegelnden Eingriff mit der Sperrlasche ausgebildet ist.

Da die Verriegelung der Rastierkontur nur dann aktuatorisch gelöst wird, wenn sich der Wählhebel nicht in der ersten Rastposition bzw. Schaltgasse befindet, während der verriegelnde Eingriff des Ankers hingegen nur dann erfolgt, wenn sich der Wählhebel in der ersten Rastposition bzw. Schaltgasse befindet, führt diese doppelte Nutzung des gemeinsamen Aktuators nicht zu undefinierten Schaltzuständen oder unerwünschten Blockaden des Wählhebels.

Im Folgenden wird die Erfindung anhand lediglich Ausführungsbeispiele darstellender Zeichnungen näher erläutert. Es zeigt:
- **Fig. 1**: in schematischer isometrischer Ansicht eine Ausführungsform einer Betätigungseinrichtung gemäß der vorliegenden Erfindung;
- **Fig. 2**: in einer **Fig. 1** entsprechenden Darstellung und Ansicht Kreuzstück und Rastiereinrichtung der Betätigungseinrichtung gemäß **Fig. 1**;
- **Fig. 3**: in schematischer isometrischer Ansicht die beiden Rastkonturen und den Magnetaktuator der Rastiereinrichtung, mit aktivierter Rastierkontur;
- **Fig. 4**: in einer **Fig. 3** entsprechenden Darstellung und Ansicht die beiden Rastkonturen und den Aktuator, mit aktivierter Schrägkontur;
- **Fig. 5**: in schematischer, isometrischer Seitenansicht Kreuzstück, Magnetaktuator und Sperrlasche der Betätigungseinrichtung gemäß **Fig. 1** bis **4**; und
- **Fig. 6**: in einer vergrößerten, **Fig. 5** entsprechenden Darstellung und Ansicht den Magnetaktuator und die beiden Rastkonturen der Betätigungseinrichtung gemäß **Fig. 1** bis **5**.

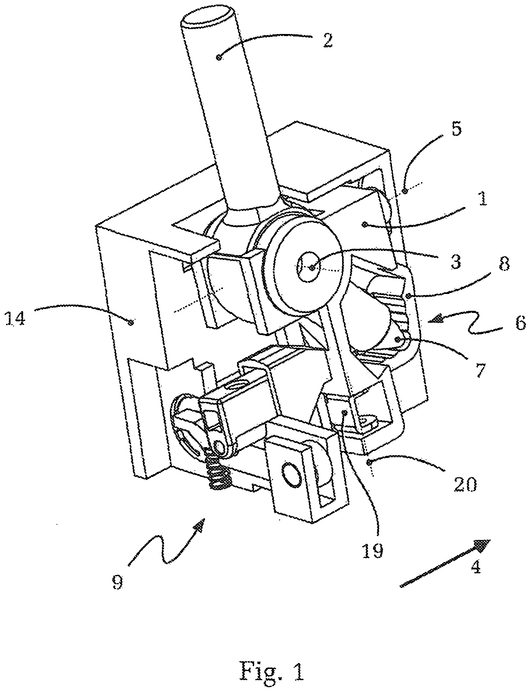

**Fig. 1** zeigt in schematisch ausgeführter isometrischer Darstellung eine Ausführungsform einer Betätigungseinrichtung gemäß der vorliegenden Erfindung. Der besseren Einsicht und Übersicht halber sind in der Darstellung der **Fig. 1** Teile des Gehäusesockels 14 sowie des Kreuzstücks 1 und des Wählhebels 2 nicht dargestellt.

Man erkennt somit zunächst einmal den in einem Kreuzstück 1 gelagerten Betätigungshebel bzw. Wählhebel 2. Dank seiner Lagerung im Kreuzstück 1 lässt sich der Wählhebel 2 um die erste Schwenkachse 3 bezüglich der Fahrtrichtung 4 des Kraftfahrzeugs nach vorne und nach hinten bewegen, während sich das Kreuzstück 1 mitsamt dem Wählhebel 2 um die zweite Schwenkachse 5 seitlich hin und her schwenken lässt. Auf diese Weise werden die Bewegungsfreiheitsgrade des Wählhebels 2 - beispielsweise innerhalb eines üblichen Schaltschemas einer manuellen Gangbetätigung, oder im Schaltschema eines Getriebeautomaten mit zusätzlicher manueller Schaltgasse - definiert.

Die Betätigungseinrichtung gemäß **Fig. 1** weist zwei Rastiereinrichtungen auf. Eine erste Rastiereinrichtung 6 mit einem federbelasteten Rastierpin 7 dient der Rastierung des Wählhebels 2 bei Bewegungen des Wählhebels um die erste Schwenkachse 3 fahrzeugbezogen nach vorne bzw. nach hinten, vgl. Fahrtrichtung 4. Bei der dargestellten Ausführungsform handelt es sich bei der ersten Rastiereinrichtung 6 um eine monostabile Rastiereinrichtung, bei der der Wählhebel 2 aufgrund der Formgebung der Rastkulisse 8 bei Kräftefreiheit stets wieder in seinen neutrale Mittelstellung entlang der Fahrtrichtung 4 zurückkehrt.

Die zweite Rastiereinrichtung 9 dient zur Rastierung des Wählhebels 2 in der Querrichtung, bei Seitwärtsbewegungen des Wählhebels 2 um die zweite Schwenkachse 5, also beim Schaltgassenwechsel des Wählhebels 2.

Die zweite Rastiereinrichtung 9 ist nochmals in **Fig. 2**, zusammen mit den wesentlichen Bestandteilen des Kreuzstücks 1 abgebildet. Man erkennt zunächst einmal das Kreuzstück 1 mit den beiden Schwenkachsen 3 und 5. Ferner wird in **Fig. 2** ein mit dem Kreuzstück 1 mittels einer Druckfeder (nicht dargestellt) federbelastet verbundenes Lagerelement 10 mit einer darin drehbar gelagerten Rastierrolle 11 erkennbar, sowie eine Rastkonturanordnung, bestehend aus den Rastkonturen 12 und 13. Die Anordnung der beiden Rastkonturen 12 und 13 geht dabei besonders deutlich nochmals aus den Figuren 3 und 4 hervor.

Bei seitlichen Bewegungen des Wählhebels 2 und damit auch des Kreuzstücks 1 wird das Lagerelement 10 mit der Rastierrolle 11 - um die Schwenkachse 5, den Bewegungen des Wählhebels 2 entgegengerichtet - seitwärts verschwenkt, wodurch sich die Rastierrolle 11 im Bereich der Konturen der Rastkonturanordnung 12 und 13 bewegt und dabei die jeweils aktive der beiden Rastkonturen 12, 13 abtastet.

Insbesondere aus **Fig. 3** geht hervor, auf welche Weise sich die Rastkonturanordnung aus den beiden Rastkonturen 12 und 13 zusammensetzt. Man erkennt, dass die erste Rastkontur 12, welche erfindungsgemäß die Schrägkontur 12 zur Rückführung des Wählhebels 2 in die erste Schaltgasse darstellt, fest mit dem Gehäusesockel der Betätigungseinrichtung verbunden ist (bzw. mit dem Aktuatorgehäuse 14, welches hier einstückig mit dem Gehäusesockel der Betätigungseinrichtung ausgebildet ist). Hingegen ist die zweite Rastkontur, die erfindungsgemäß die Rastierkontur 13 zur Rastierung des Wählhebels 2 in den Schaltgassen bildet, schwenkbeweglich um die Achse 15 gemäß **Fig. 3** und **4** mit dem Gehäusesockel bzw. dem Aktuatorgehäuse 14 verbunden.

Die Rastierkontur 13 ist mittels einer Schraubenfeder 16 in Richtung auf ihre zeichnungsbezogen obere Position federbelastet, und wird in dieser oberen Position zusätzlich durch das Ende eines Ankerstifts 17 eines elektromagnetischen Aktuators 18 fixiert, wie dies in **Fig. 3** dargestellt ist. Man erkennt, dass die Schrägkontur 12 in der in **Fig. 3** dargestellten Relativposition der beiden Rastkonturen 12, 13 durch die Rastierkontur 13 überdeckt ist, wodurch die Rastierrolle 11 zunächst lediglich die Rastierkontur 13 abtastet, und dabei von der Schrägkontur 12 zunächst unbeeinflusst bleibt.

Dies bedeutet mit anderen Worten, dass bei der in **Fig. 3** dargestellten Relativposition der beiden Rastkonturen 12 und 13 eine normale, bistabile Rastierung der Rastierrolle 11 und damit des Kreuzstücks 1 sowie des Wählhebels 2 in den beiden Schaltgassen der dargestellten Betätigungseinrichtung erfolgt, solange sich die Rastierkontur 13 in der zeichnungsbezogen oberen, verriegelten Position gemäß **Fig. 3** befindet.

Soll hingegen der Wählhebel 2 aktuatorisch aus der Schaltgasse gemäß der Darstellung von **Fig. 1** heraus und selbsttätig in die andere der beiden Schaltgassen der dargestellten Betätigungseinrichtung zurückgeführt werden, so wird hierzu der Magnetaktuator 18 aktiviert, wodurch der Ankerstift 17 zurückgezogen und die Rastierkontur 13 freigegeben wird. Da die Schraubenfeder 16 der beweglichen Rastierkontur 13 effektiv schwächer ist als die zeichnungsbezogen nach unten wirkende Federbelastung der Rastierrolle 11 bzw. des Lagerelements 10, führt die Freigabe der Bewegung der Rastierkontur 13 durch den dann zurückgezogenen Magnetaktuator 18 dazu, dass die Rastierkontur 13 aufgrund der Federkraft der federbelasteten Rastierrolle 11 um ihre Schwenkachse 15 zeichnungsbezogen nach unten verdrängt bzw. verschwenkt wird.

Hierdurch ergibt sich die veränderte Relativposition zwischen Rastierkontur 13 und Schrägkontur 12, wie sie in **Fig. 4** dargestellt ist. In dieser Relativposition von Rastierkontur 13 und Schrägkontur 12 interagiert die Rastierrolle 11 somit unmittelbar mit der Schrägkontur 12, während die rastierende Wirkung der Rastierkontur 13 vorübergehend aufgehoben ist.

Aufgrund der Federbelastung der Rastierrolle 11 führt dies dazu, dass die Rastierrolle 11 entlang des Gefälles der Schrägkontur 12 zeichnungsbezogen nach unten gleitet und damit gleichzeitig zeichnungsbezogen nach links ausgelenkt wird. Hierdurch erfährt das Kreuzstück 1 eine Rotation um die zweite Schwenkachse 5 (zeichnungsbezogen im Uhrzeigersinn), wodurch der gewünschte Schaltgassenwechsel des Wählhebels 2 somit selbsttätig erfolgt.

Da die Formgebung der Rastierkontur 13 an deren erster Rastposition mit der Formgebung der tiefsten Stelle der Schrägkontur 12 übereinstimmt, wenn sich die Rastierkontur 13 in ihrer ersten, rastierelementnahen Position befindet (vgl. **Fig. 3** im Bereich der punktierten Linie), kann die Rastierkontur 13 nach abgeschlossenem Schaltgassenwechsel des Wählhebels 2 aufgrund der Federwirkung der Schraubenfeder 16 selbsttätig wieder aus ihrer Stellung gemäß **Fig. 4** in die Stellung gemäß **Fig. 3** zurückkehren. Ebenso kann der in der Relativposition der Rastkonturen 12, 13 gemäß **Fig. 4** noch in seiner eingezogenen Stellung blockierte Ankerstift 17 des Magnetaktuators 18 wieder in seine Ausgangsstellung gemäß **Fig. 3** zurückkehren, in welcher er die Rastierkontur 13 erneut in deren zeichnungsbezogen oberen, rastierelementnahen Position fixiert. Somit ist unmittelbar nach dem aktuatorisch ausgelösten, selbsttätigen Schaltgassenwechsel des Wählhebels 2 die normale Betriebsbereitschaft und Rastierung der Betätigungseinrichtung wiederhergestellt.

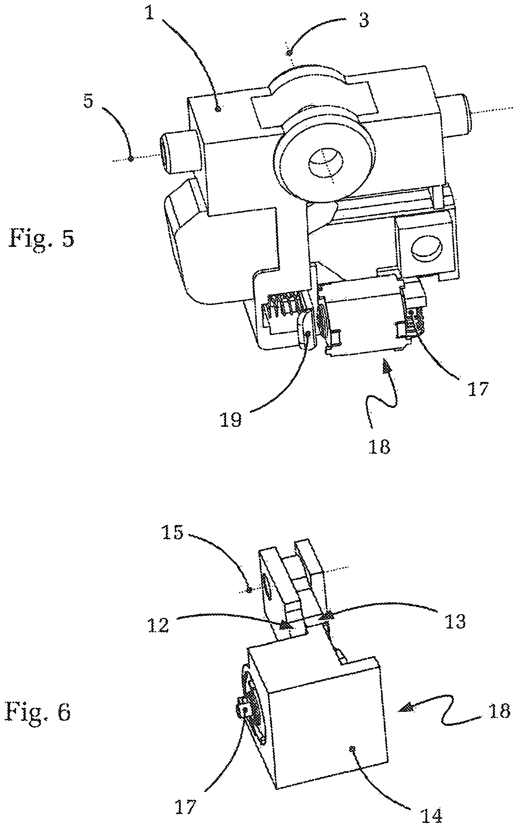

**Fig. 5** zeigt die bei dieser Ausführungsform der Betätigungseinrichtung zusätzlich vorhandene Sperrlasche 19, mit welcher sich der Wählhebel 2 in der Position der ersten Schaltgasse (vgl. punktierte Linie in **Fig. 3**) verriegeln lässt, z.B. um damit eine Sperrung des Wechsels in die manuelle Schaltgasse unter bestimmten Zustandsbedingungen (beispielsweise Wählhebel in einer der Positionen "P", "R" oder "N") realisieren zu können. Die Sperrlasche 19, deren bewegliche Schwenkverbindung mit dem Kreuzstück 1 mittels der Schwenkachse 20 aus **Fig. 1** hervorgeht, besitzt zum Zweck der Verriegelung eine in den Figuren nicht sichtbare Bohrung in Verlängerung des Ankerstifts 17 des Magnetaktuators 18.

Bei Aktivierung des Magnetaktuators 18 wird dabei nicht nur die Rastierkontur 13 entriegelt, wie oben anhand der Beschreibung der **Fig. 3** und 4 geschildert, sondern es wird gleichzeitig das bezogen auf die **Fig. 1** bis 4 rückwärtige Ende des Ankerstifts 17 des Magnetaktuators 18 ausgefahren, vgl. **Fig. 6****.** Hierdurch kann dieses Ende des Ankerstifts 17 in die zugehörige Bohrung der Sperrlasche 19 einfahren, sobald sich der Betätigungshebel 2 und damit das Kreuzstück 1 in der mit der ersten Schaltgasse übereinstimmenden Position befinden (vgl. punktierte Linie in **Fig. 3**). Hierdurch werden Kreuzstück 1 und Betätigungshebel 2 - mittels Eingriffs des Ankerstifts 17 in die Sperrlasche 19 - sodann in der ersten Schaltgasse solange verriegelt, wie der Magnetaktuator 18 aktiviert bleibt, beispielsweise also so lange, wie sich der Wählhebel in einer der Positionen "P", "R" oder "N" befindet, für den Fall, dass der Wechsel in die manuelle Schaltgasse nur aus der Wählhebelstellung "D" möglich sein soll.

Um das Einrasten des Ankerstifts 17 des Magnetaktuators 18 in die Sperrlasche 19 zu erleichtern bzw. sicherzustellen, ist das Ende der Sperrlasche 19 angeschrägt, und die Sperrlasche 19 ist federbelastet sowie um die Schwenkachse 20 gemäß **Fig. 1** schwenkbar mit dem Kreuzstück 1 verbunden. Auf diese Weise kann die Sperrlasche auch bei bereits ausgefahrenem Ankerstift 17 noch in den Ankerstift 17 einrasten, wenn sich Betätigungshebel 2 und Kreuzstück 1 aus der zweiten Schaltgasse in die erste Schaltgasse zurück bewegen. Mit demselben Effekt kann - anstelle der Sperrlasche 19 - auch der Ankerstift 17 auf geeignete Weise angefedert sein, um bei der Zurück-Bewegung des Kreuzstücks 1 durch die Schrägung der Sperrlasche zunächst verdrängt zu werden, und anschließend in die Bohrung der Sperrlasche 19 einfahren zu können.

**Fig. 6** zeigt nochmals die Einheit aus Aktuatorgehäuse 14 und Schrägkontur 12 im Zusammenbau mit dem Magnetaktuator 18 und mit der schwenkbar an Aktuatorgehäuse 14 und Schrägkontur 12 angelenkten Rastierkontur 13. Man erkennt den hier rückwärtig ausgefahrenen Ankerstift 17 des Magnetaktuators 18, der in dieser Stellung in die oben genannte Bohrung der Sperrlasche 19 einfahren kann, und der somit die Sperrlasche 19 sowie das mit der Sperrlasche 19 verbundene Kreuzstück 1 gemäß **Fig. 5** in der ersten Schaltgasse verriegelt.

Im Ergebnis wird damit deutlich, dass mit der Erfindung eine Betätigungseinrichtung geschaffen wird, mit der sich der gewünschte aktuatorische Positions- bzw. Schaltgassenwechsel mit geringem konstruktivem Aufwand, bei minimalem Bauraumbedarf, und gleichzeitig nahezu geräuschlos realisieren lässt. Die Erfindung leistet somit einen Beitrag zur Verbesserung der Ergonomie und Sicherheit sowie der Bauraum- und der Kosteneffektivität, insbesondere bei der Anwendung im Bereich der Schaltbetätigung von Kraftfahrzeugen.

### Bezugszeichenliste

- 1: Kreuzstück
- 2: Betätigungshebel, Wählhebel
- 3: Schwenkachse
- 4: Fahrtrichtung
- 5: Schwenkachse
- 6: Rastiereinrichtung
- 7: Rastierpin
- 8: Rastkulisse
- 9: Rastiereinrichtung
- 10: Lagerelement
- 11: Rastierrolle
- 12: Schrägkontur
- 13: Rastierkontur
- 14: Aktuatorgehäuse, Gehäusesockel
- 15: Schwenkachse
- 16: Schraubenfeder
- 17: Ankerstift
- 18: Magnetaktuator
- 19: Sperrlasche
- 2 0: Lagerachse

## Patentansprüche

1. Betätigungseinrichtung, insbesondere zur Auswahl von Schaltstufen eines shift-by-wire-Gangwechselgetriebes, die Betätigungseinrichtung umfassend einen Gehäusesockel (14) sowie einen zwischen zumindest zwei Rastpositionen hin und her bewegbaren Wählhebel (2) mit einer ein federbelastetes Rastierelement (11) umfassenden Rastiereinrichtung (9), die Rastiereinrichtung (9) ferner aufweisend eine Rastierkontur (13) zur Rastierung des Wählhebels (2) sowie eine Schrägkontur(12) zur Rückführung des Wählhebels (2) in die erste Rastposition, wobei das Wählhebel-Rastierelement (11) gleichzeitig sowohl mit der Rastierkontur (13) als auch mit der Schrägkontur(12) in Überdeckung bringbar ist, und wobei Rastierkontur (13) und Schrägkontur (12) in Richtung auf das Wählhebel-Rastierelement (11) relativ zueinander verstellbar sind,
wobei
die Schrägkontur (12) im Wesentlichen starr mit dem Gehäusesockel (14) verbunden und die Rastierkontur (13) relativ zum Gehäusesockel (14) zwischen einer ersten, rastierelementnahen und einer zweiten, rastierelementfernen Position hin und her bewegbar ist, wobei die Rastierkontur (13) in Richtung auf das Wählhebel-Rastierelement (11) federbelastet ist und in ihrer ersten Position die Schrägkontur (12) überdeckt,
wobei die Betätigungseinrichtung eine Aktuatoreinrichtung (18) mit einer aktuatorischen Sperre (17) zur Verriegelung der Rastierkontur (13) in ihrer ersten, rastierelementnahen Position umfasst, wobei die Federbelastung (16) der beweglichen Rastierkontur (13) effektiv schwächer ist als die Federbelastung des Rastierelements (11), und wobei die erste Rastposition der Rastierkontur (13) mit der ersten Rastposition der Schrägkontur (12) übereinstimmt, wenn sich die Rastierkontur (13) in ihrer ersten, rastierelementnahen Position befindet.

2. Betätigungseinrichtung nach Anspruch 1,
**dadurch gekennzeichnet,**
**dass** die aktuatorische Sperre durch einen Anker (17) eines Elektromagneten (18) gebildet ist.

3. Betätigungseinrichtung nach Anspruch 1 oder 2,
**dadurch gekennzeichnet,**
**dass** das Wählhebel-Rastierelement (11) eine im Wesentlichen zylindrische bzw. prismatische Form aufweist.

4. Betätigungseinrichtung nach Anspruch 3,
**dadurch gekennzeichnet,**
**dass** das Wählhebel-Rastierelement als federbelastete Rastierrolle (11) ausgebildet ist.

5. Betätigungseinrichtung nach einem der Ansprüche 1 bis 4,
**dadurch gekennzeichnet,**
**dass** die Rastiereinrichtung (9) zur Rastierung des Wählhebels (2) in zumindest zwei Schaltgassen ausgebildet ist.

6. Betätigungseinrichtung nach einem der Ansprüche 1 bis 5,
**gekennzeichnet durch**
ein Kreuzstück (1) zur Führung des Wählhebels (2) und eine am Kreuzstück (1) angeordnete Sperrlasche (19), wobei die Sperrlasche (19) mittels eines Sperraktuators (18) mit dem Gehäusesockel (14) verrastet werden kann.

7. Betätigungseinrichtung nach Anspruch 6,
**dadurch gekennzeichnet,**
**dass** die Sperrlasche (19) mit einem Ende eines Ankers (17) eines elektromagnetischen Aktuators (18) in Eingriff bringbar ist.

8. Betätigungseinrichtung nach Anspruch 6 oder 7,
**gekennzeichnet durch**
einen gemeinsamen elektromagnetischen Aktuator (18) mit einem Anker (17), wobei ein Ende des Ankers (17) zur Verriegelung der Rastierkontur (13) und das gegenüberliegende Ende des Ankers (17) zum verriegelnden Eingriff mit der Sperrlasche (19) ausgebildet ist.

## Claims

1. Activation device, in particular for selecting shift stages of a shift-by-wire change speed gearbox, the activation device comprising a housing base (14) and a selector lever (2) which can be moved to and fro between at least two latched positions and which has a latching device (9) comprising a spring-loaded latching element (11), the latching device (9) also having a latching contour (13) for latching the selector lever (2) and an oblique contour (12) for returning the selector lever (2) to the first latched position, wherein the selector lever latching element (11) can be placed in a congruent position both with the latching contour (13) and with the oblique contour (12) simultaneously, and wherein the latching contour (13) and the oblique contour (12) can be adjusted relative to one another in the direction of the selector lever latching element (11),
wherein
the oblique contour (12) is connected essentially rigidly to the housing base (14), and the latching contour (13) can be moved to and fro relative to the housing base (14) between a first position which is near to the latching element and a second position which is remote from the latching element, wherein the latching contour (13) is spring-loaded in the direction of the selector lever latching element (11), and in its first position it is congruent with the oblique contour (12),
wherein the activation device comprises an actuator device (18) having an actuator catch (17) for locking the latching contour (13) in its first position near to the latching element, wherein the spring loading (16) of the moveable latching contour (13) is effectively weaker than the spring loading of the latching element (11), and wherein the first latched position of the latching contour (13) coincides with the first latched position of the oblique contour (12) when the latching contour (13) is in its first position near to the latching element.

2. Activation device according to Claim 1,
**characterized**
**in that** the actuator catch is formed by an armature (17) of an electromagnet (18).

3. Activation device according to Claim 1 or 2,
**characterized**
**in that** the selector lever latching element (M) has an essentially cylindrical or prismatic shape.

4. Activation device according to Claim 3,
**characterized**
**in that** the selector lever latching element is embodied as a spring-loaded latching roller (11).

5. Activation device according to one of Claims 1 to 4,
**characterized**
**in that** the latching device (9) is designed to latch the selector lever (2) in at least two shifting gates.

6. Activation device according to one of Claims 1 to 5,
**characterized by**
a cross element (1) for guiding the selector lever (2) and a locking tab (19) which is arranged on the cross element (1), wherein the locking tab (19) can be latched to the housing base (14) by means of a locking actuator (18).

7. Activation device according to Claim 6,
**characterized**
**in that** the locking tab (19) can be placed in engagement with one end of an armature (17) of an electromagnetic actuator (18).

8. Activation device according to Claim 6 or 7,
**characterized by**
a common electromagnetic actuator (18) having an armature (17), wherein one end of the armature (17) is designed to lock the latching contour (13), and the opposite end of the armature (17) is designed to enter into locking engagement with the locking tab (19).

## Revendications

1. Dispositif d'actionnement, en particulier pour la sélection de rapports de changement de vitesses d'une transmission à changement de vitesses à commande électrique, le dispositif d'actionnement comprenant une embase de boîtier (14) ainsi qu'un levier de sélection (2) pouvant être déplacé en va et vient entre au moins deux positions d'encliquetage avec un dispositif d'encliquetage (9) comprenant un élément d'encliquetage (11) sollicité par ressort, lequel dispositif d'encliquetage (9) présentant en outre un contour d'encliquetage (13) pour l'encliquetage du levier de sélection (2) ainsi qu'un contour oblique (12) pour le retour du levier de sélection (2) dans la première position d'encliquetage, l'élément d'encliquetage (11) du levier de sélection pouvant être amené en recouvrement simultanément à la fois avec le contour d'encliquetage (13) et avec le contour oblique (12), et le contour d'encliquetage (13) et le contour oblique (12) pouvant être déplacés l'un par rapport à l'autre dans la direction de l'élément d'encliquetage (11) du levier de sélection,
le contour oblique (12) étant connecté essentiellement rigidement à l'embase de boîtier (14) et le contour d'encliquetage (13) pouvant être déplacé suivant un mouvement de va et vient par rapport à l'embase de boîtier (14) entre une première position proche de l'élément d'encliquetage et une deuxième position éloignée de l'élément d'encliquetage, le contour d'encliquetage (13) étant sollicité par ressort dans la direction de l'élément d'encliquetage (11) du levier de sélection et recouvrant le contour oblique (12) dans sa première position,
le dispositif d'actionnement comprenant un dispositif d'actionneur (18) avec un verrouillage par actionneur (17) pour verrouiller le contour d'encliquetage (13) dans sa première position proche de l'élément d'encliquetage, la sollicitation par ressort (16) du contour d'encliquetage mobile (13) étant effectivement plus faible que la sollicitation par ressort de l'élément d'encliquetage (11), et la première position d'encliquetage du contour d'encliquetage (13) coïncidant avec la première position d'encliquetage du contour oblique (12), lorsque le contour d'encliquetage (13) se trouve dans sa première position proche de l'élément d'encliquetage.

2. Dispositif d'actionnement selon la revendication 1,
**caractérisé en ce que**
le verrouillage par actionneur est formé par une armature (17) d'un électroaimant (18).

3. Dispositif d'actionnement selon la revendication 1 ou 2,
**caractérisé en ce que**
l'élément d'encliquetage (11) du levier de sélection présente une forme sensiblement cylindrique ou prismatique.

4. Dispositif d'actionnement selon la revendication 3,
**caractérisé en ce que**
l'élément d'encliquetage du levier de sélection est réalisé sous forme de rouleau d'encliquetage (11) sollicité par ressort.

5. Dispositif d'actionnement selon l'une quelconque des revendications 1 à 4,
**caractérisé en ce que** le dispositif d'encliquetage (9) est réalisé pour encliqueter le levier de sélection (2) dans au moins deux voies de sélection.

6. Dispositif d'actionnement selon l'une quelconque des revendications 1 à 5,
**caractérisé par**
un croisillon (1) pour le guidage du levier de sélection (2) et une patte de verrouillage (19) disposée sur le croisillon (1), la patte de verrouillage (19) pouvant être encliquetée au moyen d'un actionneur de verrouillage (18) avec l'embase du boîtier (14).

7. Dispositif d'actionnement selon la revendication 6,
**caractérisé en ce que**
la patte de verrouillage (19) peut être amenée en prise avec une extrémité d'une armature (17) d'un actionneur électromagnétique (18).

8. Dispositif d'actionnement selon la revendication 6 ou 7,
**caractérisé par**
un actionneur électromagnétique commun (18) avec une armature (17), une extrémité de l'armature (17) étant réalisée pour verrouiller le contour d'encliquetage (13) et l'extrémité opposée de l'armature (17) étant réalisée pour l'engagement de verrouillage avec la patte de verrouillage (19).
